# EUROPEAN PATENT SPECIFICATION

(11) **EP 2 704 238 B1**
(45) Date of publication and mention of the grant of the patent: **29.06.2016**
(21) Application number: 12777558.3
(22) Date of filing: 25.04.2012
(51) Int. Cl.: H01M 4/66, H01M 10/0525, H01M 10/0568, H01M 10/0569, H01M 4/133

(54) **SECONDARY BATTERY**
SEKUNDÄRBATTERIE
ACCUMULATEUR

(30) Priority: 26.04.2011 JP 2011098316
(43) Date of publication of application: 05.03.2014
(73) Proprietor: Showa Denko K.K., Tokyo 105-8518 (JP)
(72) Inventor: YOKOUCHI Hitoshi, Tokyo 105-8518 (JP); OHMORI Masahiro, Tokyo 105-8518 (JP); KUNISAWA Masatoshi, Tokyo 105-8518 (JP)
(74) Representative: Strehl Schübel-Hopf & Partner
(86) International application number: PCT/JP2012/061028
(87) International publication number: WO 2012/147761

(56) References cited:
- JP-A- 2006 302 616
- JP-A- 2006 302 616
- JP-A- 2007 226 969
- JP-A- 2008 060 060
- JP-A- 2010 282 836
- US-A1- 2009 029 255

## Description

### TECHNICAL FIELD

The present invention relates to a secondary battery. More specifically, the present invention relates to a secondary battery wherein aluminum foil is used as a negative electrode.

### BACKGROUND ART

Recently, in order to prevent global warming, a decrease in generated carbon dioxide has been desired. For example, a shift from gasoline-powered vehicles to hybrid vehicles and electric vehicles, in which a secondary battery which discharges little carbon dioxide is installed, is increasing in automobile industry. Development of a lithium secondary battery, which affects driving distance, safety and reliability of a vehicle, especially deserves attention. Generally, a lithium secondary battery is formed with a positive electrode collector, a negative electrode collector, a positive electrode active material layer, a negative electrode active material layer, an electrolyte, a separator and an outer casing body.

Metal foil is generally used as a collector, and is selected in consideration of suppression of alloying and corrosiveness caused by components included in an electrolyte, as well as conductivity, cost, weight, versatility and the like. For example, in a generally used lithium battery wherein an oxide including lithium is used as a positive electrode active material and graphite (black lead) is used as a negative electrode active material, aluminum foil is generally used for a positive electrode and copper foil is used for a negative electrode, since the aluminum foil and the copper foil used as described above do not cause alloying with lithium, and do not corroded due to electrical potential used for each electrode.

Copper foil is one of materials which can withstand negative potential, and is made of versatile metal. Therefore, copper foil is widely used as a negative electrode collector. However, copper foil is expensive and tends to become oxidized easily under some environment conditions. Therefore, there are cases in which an uneven oxide film is formed thereon, conductivity in a battery deteriorates, and a variation degree of battery products is affected by such foil. Chromate treatment as a countermeasure thereof can be performed for a copper surface to prevent oxidation. However, there is a possibility that chromium is eluted in an electrolyte when such foil is used for a battery, and such elution is not preferable for properties of a battery. Accordingly, aluminum has been studied that whether aluminum is used as a negative electrode collector as a substitute, since aluminum is inexpensive and has a thin and stable oxide film.

Aluminum foil is very stable when the aluminum foil is used for a positive electrode collector, since an oxide film is formed or a fluoride film is formed by a reaction of a fluorine included in an electrolyte reaction. However, when the aluminum foil is used as a negative electrode collector wherein graphite is used, the foil reacts with lithium to form an alloy. Accordingly, it is known that, in addition to consumption of lithium, deterioration of the collector proceeds and cycle characteristics of a battery extremely deteriorates. Therefore, it is generally difficult to use aluminum foil as a negative electrode.

Patent document 1 discloses a lithium ion secondary battery, and describes that aluminum foil can be used as a negative electrode when an electrolyte which does not include a halogen element is used, to suppress alloying of lithium and prevent corrosion caused by a halogen element included in an electrolyte.

### Prior Art

### Patent Documents

Patent document 1: Japanese Unexamined Patent Application, First Publication No. 2010-282836

JP 2006 302616 A discloses a lithium battery with an anode with an aluminum current collector. The collector is coated with a resin comprising conductive particles forming an electrolyte repellent layer. US 2009/029255 A1 discloses a secondary battery with a cathode current collector comprising an aluminum foil coated with a film comprising carbon fine particles and a compound which does not swell in an organic solvent. This compound may be a polysaccharide.

### DISCLOSURE OF INVENTION

### Problem to be solved by the Invention

In Patent Document 1 described above, a negative electrode active material is limited to a material which includes an element which can be alloyed with lithium. Patent Document 1 discloses that when aluminum foil is used as a negative electrode collector and a generally used low-potential graphite (black lead) is used as a negative electrode active material, aluminum forms an alloy with lithium in the vicinity of 0 V. Furthermore, since an electrolyte thereof does not include a halogen element, a halogenated film is not formed on the surface of the aluminum foil, and therefore long-term durability is poor.

Therefore, the purpose of the present invention is to provide a secondary battery which enables aluminum foil to be used as a negative electrode collector even when a general graphite (black lead) is used as a negative electrode active material, and furthermore which is excellent in cycle characteristics of the secondary battery and is not expensive.

### Means for solving the problems

The present invention provides the following.
[1] A lithium ion secondary battery which comprises a positive electrode and a negative electrode, wherein
   the negative electrode includes a negative electrode collector and a negative electrode active material layer, and
   the negative electrode collector comprises a base material, which is formed of aluminum foil, and a resin film which has a thickness of 0.01 to 5 µm, includes a polysaccharide and a conductive material, and does not allow a nonaqueous electrolyte to permeate therethrough.
[2] The secondary battery according to [1], wherein the conductive material is a carbonaceous material.
[3] The secondary battery according to [2], wherein the carbonaceous material is one or more kinds selected from a group consisting of carbon black, vapor-grown carbon fiber, carbon nanofiber and carbon nanotube.
[4] The secondary battery according to [1], wherein the polysaccharide is one or more kinds selected from a group consisting of chitosan, chitin, cellulose and derivatives thereof.
[5] The secondary battery according to [1], wherein the polysaccharide is a polysaccharide to which an organic acid is ester-bonded.
[6] The secondary battery according to [1] wherein the negative electrode active material layer includes graphite.
[7] The secondary battery according to [1], wherein the nonaqueous electrolyte includes, as a solvent, one or more kinds selected from a group consisting of cyclic carbonate, chain carbonate and fatty acid ester, and includes, as an electrolyte, a fluorine-containing lithium salt.
[8] A power system which includes the secondary battery according to [1].
[9] The secondary battery according to [1], wherein the resin film includes 20 to 70 mass% of a resin.
[10] The secondary battery according to [1], wherein the resin film includes 20 to 70% by mass of the polysaccharide.
[11] The secondary battery according to [1], wherein the resin film includes 30 to 80% by mass of the conductive material.
[12] The secondary battery according to [1], wherein the resin film includes 80 to 200 parts by mass of the conductive material based on 100 parts by mass of the polysaccharide.

### Effects of invention

A secondary battery according to the present invention uses a negative electrode collector wherein a resin film which does not allow a nonaqueous electrolyte to permeate therethrough is formed on aluminum foil, and therefore it is possible to prevent alloying of aluminum with lithium wherein such alloying is conventionally caused when aluminum foil is merely used for an negative electrode collector. Accordingly, it is possible to prevent deterioration of a collector, and increase cycle characteristics of a secondary battery. Furthermore, even in a case where a general graphite is used as a negative electrode active material or a case where an electrolyte which includes a halogen element is used, aluminum foil which is lightweight and inexpensive can be used as a negative electrode collector, and material cost and manufacturing cost can extremely decrease since continuous processing can be used such as a roll-to-roll manufacturing method (send off by a roller and take up by a roller). Furthermore, when a resin film described above is a conductive film to which a conductive material is included, electron conductivity between a negative electrode active material and aluminum foil is good, and impedance and inner resistance of a secondary battery can decrease.

### BEST MODE FOR CARRYING OUT THE INVENTION

Hereinafter, preferable examples of the present invention are explained, but the present invention is not limited thereto. Substitutions, additions and omissions with respect to number, position, size, values or the like can be made without departing from the scope of the present invention.

A secondary battery according to the present invention comprises a positive electrode and a negative electrode, and the negative electrode includes a negative electrode active material layer and a collector wherein a resin film which does not allow a nonaqueous electrolyte to permeate therethrough is formed on aluminum foil.

### (Negative electrode collector)

The thickness of aluminum foil which is used in the present invention is not limited in particular, and can be optionally selected. In general, the aluminum foil preferably has a thickness of 5 to 200 µm, and more preferably 15 to 70 µm, from the viewpoint of miniaturization of a secondary battery and handling properties of aluminum foil, a collector, an electrode and the like which are generated using the foil. When a roll-to-roll manufacturing method is performed, it is preferable that foil having a thickness of 5 to 200 µm is used.

Material of the aluminum foil is not limited in particular, and conventionally known materials which are used for a collector of a secondary battery can be used. For example, either pure aluminums foil or aluminum alloy foil of the purity of 95 mass% or more can be used. Furthermore, for example, foil such as an A1085 material (pure aluminum type) and an A3003 material (Mn added type) can be cited. The aluminum foil may have a shape which has no opening, or a shape which has openings such as mesh-type foil or punching metal foil. When such foil which has openings is used, an opening ratio thereof is optionally selected, and for example, 10 to 70% is preferable since it is possible to achieve the lightweight and the downsizing of a secondary battery while the strength of the foil is maintained.

Conventionally known surface treatment may be performed for the surface of the aluminum foil. As the surface treatment, alkali washing, solvent washing, mechanical surface processing, etching, chemical treatment, anodic oxidation, wash primer, corona discharge, glow discharge and the like can be cited. When a surface treatment wherein an insulation film is further formed on the aluminum foil in addition to a naturally generated oxide film is selected from the above surface treatments and performed, it is necessary to control a thickness of the aluminum foil so that a function as a collector does not decrease.

### (Resin film)

The thickness of a resin film used in the present invention is 0.01 to 5 µm, more preferably 0.05 to 3 µm, and still more preferably 0.1 to 3 µm. When the film has such a thickness, a thin collector which is effective to miniaturize a secondary battery can be formed, and it is possible to prevent the permeation of a nonaqueous electrolyte. From the viewpoint of conductivity, resistance which depends on the thickness is small when the film thickness of the resin film is 5 µm or less, and therefore impedance and inner resistance of a secondary battery can decrease. The film thickness of the resin film which is not included in the range of the present invention is not preferable, since, for example, when the thickness is too thin, cracks and pinholes tend to be generated due to impact or stress given at the time of manufacturing a battery, and on the other hand, when the thickness is too large, resistance which depends on the thickness becomes large, and therefore impedance and inner resistance of a secondary battery increase.

The thickness of the resin film can be measured by the following procedure using TEM (transmission electron microscope). In pre-treatment, a sample is processed by FIB (focused ion beam) to expose a cross section of the sample. At this time, it is possible to perform such a processing after the negative electrode collector is embedded in an epoxy resin (for example, G2: product name, manufactured by Gatan corporation). Furthermore, in order to clarify the boundary between the resin film and the resin used for embedding, carbon or platinum may be deposited on a resin film of the collector, and then the collector is embedded in the resin to perform the processing.

Here, platinum is more preferably used when a carbonaceous material is used as a conductive material described below, since difference between the resin film and the resin is clearly shown. Subsequently, to the cross section which is exposed as described above, elemental analysis is performed by EDX (energy dispersive X-ray spectrometry) or the like using TEM. Boundaries between aluminum foil / an aluminum oxide film / a resin film are determined by confirming an area where aluminum is mainly detected as aluminum foil and confirming a thin film area where aluminum and oxygen are detected as an aluminum oxide film. The boundaries can be easily distinguished since contrasts between the areas are large.

At this time, it is preferable that a magnification ratio is optionally changed in a range of 10,000 to 200,000 times to determine an element. Next, a thickness of the resin film is measured. The number of taken photographs is preferably three or more, more preferably five or more. Furthermore, when the thickness of the resin film is measured, per photo, measurement is preferably performed at three or more points, and more preferably at five or more points. Measurement is performed for plural points which are randomly selected, and the thickness of the resin film is determined as the arithmetic average of all measured points. At this time, when the resin film has remarkable irregularity, the minimum thickness portion and the maximum thickness portion are reliably included as the measured points.

The resin film is preferably formed such that at least the resin film is formed at a portion where a nonaqueous electrolyte contacts. The resin film may be formed on a part of the aluminum foil, or formed on the entire surface of the foil. Furthermore, although the resin film is preferably formed on both surfaces of the aluminum foil by coating, it is also preferable that the resin film is formed merely on one surface of the foil by coating if necessary. Furthermore, if the aluminum foil to which the resin film is formed is cut off, a resin film may be further formed at the end surfaces of the foil.

The resin film used herein does not allow a nonaqueous electrolyte to permeate therethrough. Here, "does not allow a nonaqueous electrolyte to permeate therethrough" means that a film does not allow a nonaqueous electrolyte permeate by a permeation test described below.

A permeation test is explained below.

A sample which is used for a permeation test is generated. At first, aluminum foil made of an A1085 material having openings, wherein the thickness thereof is 20 µm, an opening diameter thereof is 0.5 mm and an opening ratio is 40%, is used as a support substrate, and a resin film as a test sample is formed on one surface of the support substrate at the predetermined thickness. In this way, aluminum foil having openings to which a resin film is provided is prepared as a test object. The predetermined thickness is a thickness of a resin film which is actually formed on a collector, and is 0.01 to 5 µm.

Subsequently, the aluminum foil having openings on which the resin film is formed is cut off to the size of 30 cm × 30 cm, and the cut aluminum foil is set in a 200 ml beaker so that the foil has a bag-shape, while a terminal end of the aluminum foil exists outside of the beaker. At this time, it is structured such that the resin film exists at the outer side of the shape. 100 ml of a nonaqueous electrolyte which is actually used for a secondary battery is charged in the bag-shaped aluminum foil having openings, to which a resin film is formed, and after the beaker is maintained for 100 hours at a temperature of 25 °C, the electrolyte is discharged by a spuit.

The aluminum foil to which the resin film is formed is taken out from the beaker while the bag-shape thereof is maintained. Subsequently, the aluminum foil is immersed in 150 ml of isopropyl alcohol so that almost of the reverse side of a part to which the electrolyte contacted is dipped, the resin film is washed while moving the foil for five minutes, and the aluminum foil is taken out after washing.

After the aluminum foil having openings on which the resin film is formed is washed as described above, the obtained isopropyl alcohol washing liquid is analyzed by ICP-AES (inductively coupled plasma atomic emission spectrometry), ion chromatography and GC-FID (gas chromatography / flame ionization detection). According to the following conditions, ICP-AES is performed for the analysis of lithium and phosphorous, ion chromatography is performed for analysis of fluorine, and GC-FID is performed for the analysis of carbonate used as a solvent. When no analysis object is detected by any of the analysis, it is determined that electrolyte cannot be passed through the foil.

### (ICP-AES (analysis of lithium and phosphorous))

1 ml of the isopropyl alcohol washing liquid which is obtained by washing the aluminum foil is provided in a 100 ml beaker which is separately prepared, and the washing liquid is heated to remove isopropyl alcohol from the liquid. Then, the beaker is washed with 10 ml of pure water, and the water is collected to a polypropylene container. After this operation is repeated four times, 1 ml of nitric acid is added to the collected washing water, and pure water is further added thereto to set the amount thereof to 50 ml. The solution obtained by the operation is used for ICP-AES measurement.

In the ICP-AES measurement, a standard sample is prepared with a commercial standard solution (0 to 10 ppm), and the calibration line is prepared using the solution to perform quantitative analysis. In the analysis method, the quantifying lower limit of both lithium and phosphorous is set to 50 ppm. As the detection limit of the ICP measurement, a value is used which is 3 times of a standard deviation of the quantitative results. The quantitative results are obtained such that the same measurement is performed (measurement: three times) using isopropyl alcohol instead of the isopropyl alcohol washing liquid. When the measured results of a sample solution are less than the detection limit, it is determined that an element to be measured is not detected. Here, measured wavelengths are Li: 670.785 nm and P: 178.287 nm.

### (Ion chromatography (analysis of fluorine))

The isopropyl alcohol washing liquid which is obtained by washing the aluminum foil is diluted to 500 times, and the obtained solution is used for measurement of ion chromatography. In the measurement, standard samples wherein the concentrations thereof are known (0.5 µg/ml, 1.0 µg/ml and 2.0 µg/ml) are prepared using a commercial standard solution, and the calibration line is prepared using the samples to perform quantitative analysis. As the detection limit of the ion chromatography, a value is used which is 3 times of S/N (signal/noise) and is according to JIS K0124:2002 which is general rules of high speed liquid chromatography. When the measured result of a sample solution is less than the detection limit, it is determined that an element to be measured is not detected. In the analysis method, the quantifying lower limit of fluorine is set to 50 ppm. As the measurement conditions, an eluent : an aqueous solution of 1.8 mM of NaCO₃ + an aqueous solution of 1.7 mM of NaHCO₃, and a flow rate : 1 ml/minute are used.

### (GC-FID (analysis of carbonate))

The isopropyl alcohol washing liquid which is obtained by washing the aluminum foil is diluted to 100 times by anhydrous acetonitrile, and quantitative analysis is performed by GC-FID according the following conditions. A nonpolar capillary column is used as a column. A standard sample is prepared by diluting commercial reagents (ethylene carbonate, propylene carbonate and dimethylcarbonate) by anhydrous acetonitrile, and the quantitative value is obtained by an area percentage with respect to the standard sample. As a detection limit, a value is used which is 3 times of a ratio of signal/noise according to JIS K0114:2000. When the measured results of a sample solution are less than the detection limit, it is determined that an element to be measured is not detected.

### Temperature of a column oven: 40 °C (5 minutes) → (20°C/ minute) → 320°C (5 minutes)

Carrier gas: He
Column flow rate: 1.5 ml/min (constant flow)
Injection mode: split (split ratio: 1 : 20)
Temperature of an injection inlet: 280°C
Injection amount: 1 µl
Concentration of sample: 1% (v/w, diluted by anhydrous acetonitrile)
FID temperature: 350 °C

The resin film which does not allow a nonaqueous electrolyte to permeate therethrough can be selected as necessary. Examples of a resin which can be included in the resin film and has impermeable ability with respect to a nonaqueous electrolyte includes: a polymer which is obtained by polymerizing one of or two or more kinds of an acrylic monomer, such as acrylic acid, methacrylic acid, itaconic acid, (meth)acrylmorpholine, N, N-dimethyl (meth)acrylamide, N,N-dimethylaminoethyl (meth)acrylate, N, N-dimethylaminopropyl (meth)acrylamide and glycerin (meth)acrylate; a vinyl polymer such as polyvinyl acetal, ethylene-vinyl alcohol copolymer, polyvinyl alcohol, poly(N-vinyl formamide) and poly(N-vinyl-2-pyrrolidone); and resins such as a polysaccharide.

Among the resins described above, when a film which includes a polysaccharide is used, a resin film excellent in impermeability with respect to a nonaqueous electrolyte can be obtained. The reason is considered that when a resin film which includes a polysaccharide is formed, a continuous thin film can be obtained which has high film density and no fine pores, and therefore permeation of a nonaqueous electrolyte can be suppressed.

The resin described above may be used to provide a film including only one kind of the resin, or a film including two or more kinds of the resin. When a film is formed using two or more kinds of the resin, it may be possible that two or more kinds of the resin are simply mixed; a cross-linked structure is formed between the resins which are different from each other; or an interpenetrating polymer network structure or a semi-interpenetrating polymer network structure is formed between the resins which are different from each other. It is preferable that the cross-linked structure, the interpenetrating polymer network structure or the semi-interpenetrating polymer network structure is formed.

It is preferable that the aforementioned resin is included in the resin film in an amount of 20 to 70 mass%, and still more preferably 20 to 60 mass% as the total amount.

### (Polysaccharide)

A polysaccharide is a compound obtained by polycondensation of a monosaccharide. The polysaccharide used in the present invention preferably has a weight average molecular weight of 1.0 × 10⁴ to 2.0 × 10⁵, and more preferably 5.0 × 10⁴ to 2.0 × 10⁵. When the molecular weight is in the range, workability during the formation of a resin film is good, and the strength of the resin film is excellent. The molecular weight can be obtained by gel permeation chromatography as a value which is converted based on a standard sample such as pllulan. The polysaccharide may be homopolysaccharide, or heteropolysaccharide.

The polysaccharide used in the present invention may be a derivative of a polysaccharide. Examples of the derivative include: hydroxyalkylated compound, a carboxyalkylated compound and a compound esterified with a sulfuric acid. When a polysaccharide has been hydroxyalkylated, such a compound is especially preferable since solubility thereof in a solvent is high, and formation of a resin film becomes easy. Examples of a hydroxyalkyl group include: a hydroxyethyl group, a hydroxypropyl group and a glyceryl group. The glyceryl group is preferably used. The hydroxyalkylated polysaccharide can be formed by the conventionally known method.

Examples of the polysaccharide includes: agarose, amyloses, amylopectins, align acid, inulin, carageenans, chitins, glycogens, glucomannans, keratin sulfate, colominic acid, chondroitin sulfuric acid, cellulose, dextrans, starch, hyaluronic acid, pectin, pectic acids, heparan sulfate, levan, lentinan, chitosan, pullulan, curdlan and derivatives thereof. Among the polysaccharide, chitins, chitosan and cellulose are preferable, and chitosan is more preferable.

It is preferable that the polysaccharide is included in the resin film in an amount of 20 to 70% by mass, and still more preferably 20 to 50% by mass.

### (Conductive materials)

It is preferable that the resin film has conductivity, so that exchange of electrons between the aluminum foil and the negative electrode active material layer is smoothly performed. Accordingly, it is preferable that the resin film includes a conductive material. The conductive material can be selected as needed, and it is preferable that a carbonaceous material is included as the conductive material.

The carbonaceous material can be selected as needed, and preferable examples thereof include: carbon black such as acetylene black, ketjen black and furnace black, a carbon fiber, a vapor-grown carbon fiber, a carbon nano tube, a carbon nano fiber and the like. The conductive carbonaceous materials can be used alone, or may be used in combination of two or more types.

As the conductive material other than the carbonaceous material, a metal powder such as gold, silver, copper, nickel, iron, and zinic can be cited. Among them, gold, silver and/or copper can be preferably used, since they hardly form an alloy with lithium.

The form of the conductive material can be optionally selected, and for example, the material may be a particle having a spherical form or indeterminate form, or an anisotropically formed material such as a rod-like shape or needle-like shape. The conductive material having a particle shape can be used with no limitation regarding the particle size. However, it is preferable that the number average primary particle diameter thereof is 10 nm to 5 µm, and more preferably 10 nm to 100 nm. The number average primary particle diameter of the conductive material can be obtained such that the primary particle diameter of 100 to 1000 particles of the conductive material are measured using an electron microscope, and calculate the average thereof. The particle diameter of the material having a spherical form is obtained as a sphere-equivalent diameter, and the particle diameter of the material having an anisotropic form is obtained as a maximum major axis.

The conductive material having an anisotropic form has a large surface area per mass, and a contact area between the conductive material and the collector, the electrode active material or the like is large. Therefore, even if a small amount of such material is added, it is possible to increase the conductivity between the collector and the electrode active material and to increase the conductivity between the electrode active materials. As a particularly effective conductive material having an anisotropic form, a carbon nanotube and carbon nanofiber can be cited. As the carbon nanotube and the carbon nanofiber, those which generally have an average fiber diameter of 0.001 to 0.5 µm, preferably 0.003 to 0.2 µm, and have an average fiber length of 1 to 100 µm, preferably 1 to 30 µm, are preferable to improve conductivity. The average fiber diameter and the average fiber length of the conductive material can be obtained such that the average fiber diameter and the average fiber length of 100 to 1000 conductive fivers are observed using an electron microscope, and calculate the average thereof based on the number thereof.

The conductive material may be embedded completely in the resin film, or may be fixed in a state where a part thereof is exposed from the resin film. The state of the material dispersing in the resin film is not limited in so far as the conductivity of the resin film is obtained. It is preferable that the conductive material is not fallen off from the resin film, and a particle diameter of the conductive material and the thickness of a resin film can be selected so that excellent bonding ability is obtained.

In the present invention, it is preferable that the conductive material is included in the resin film in an amount of 30 to 80 % by mass, more preferably 30 to 70% by mass, and still more preferably 40 to 70% by mass. When the conductive material is included in the aforementioned ratio, the conductivity of the resin film increases, and the electric conductivity between the aluminum foil and the negative electrode active material layer increases.

When both a polysaccharide and a conductive material are included in the resin film, it is preferable that the conductive material is included in an amount of 80 to 200 parts by mass, more preferably 90 to 180 parts by mass, and still more preferably 100 to 160 parts by mass, based on 100 parts by mass of the polysaccharide.

### (Other components)

The resin film can include additives such as a dispersion stabilizer, a thickener, an anti-settling agent, a film formation inhibitor, an antifoaming agent, an improver of electrostatic coating properties, an adhesion improver, a leveling agent, a crosslinking catalyst and a cissing inhibitor, other than the aforementioned resin and the conductive material.

### (Organic acid)

When the resin film includes a polysaccharide, it is preferable that an organic acid is included as an additive. Organic acid functions to improve the dispersibility of the polysaccharide in a solvent, in a coating step described below. It is preferable that an organic acid whose valence is 2 or more is used, since the organic acid is bonded to a polysaccharide to form the crosslinked polysaccharide when heating and drying of a coating liquid are performed, and the film density increases and permeability of the resin film with respect to an electrolyte can be inhibited. Furthermore, from the viewpoint of crosslinking density, an organic acid having three or more valences is more preferably used. The amount of the organic acid is preferably 50 to 150 parts by mass, and still more preferably 70 to 100 parts by mass.

The organic acid may be presented in the resin film as a free component. However, as described above, it is preferable that the organic acid is included in the form wherein the organic acid is bonded to the polysaccharide. The organic acid can be optionally selected, and preferable examples thereof include: carboxylic acid, sulfonic acid and phosphonic acid. Carboxylic acid is particularly preferable. When carboxylic acid is used as the organic acid, whether or not the organic acid is bonded to a polysaccharide in the resin film can be confirmed by the method described below.

A formed resin film is cut off and measurement of FT-IR (infrared spectrum analysis) is performed according to the following conditions by the microscopy ATR method (single-reflection diamond ATR).

Measurement condition of FT-IR using microscopy ATR method
Reference: Air
Scan speed: 5 kHz
Resolution: 4 cm⁻¹
Integration times: 100 times
Measured range: 4000 to 400 cm⁻¹
Measured area: 0.8 mmϕ

As measurement conditions, resolution of 4 cm⁻¹, integration times (100 times), measured range (4000 to 400 cm⁻¹) and measured area (0.8 mmϕ) are used.

When carboxylic acid is not bonded to a polysaccharide, a single peak is confirmed in the vicinity of 1709 cm⁻¹ which is originated from adsorption regarding a carboxyl group. When the carboxyl group and a polysaccharide are bonded to each other, the structure is changed from acid to ester, and the peak shifts to a large wave number. The peak shift originated from the structural change causes a transfer to the vicinity of 1735 cm⁻¹, and therefore the bonding degree can be easily calculated by confirming the shift amount from 1709 cm⁻¹.

The kind of carboxyl acid can be selected as needed. Examples thereof include: aromatic carboxylic acid, aliphatic carboxylic acid and alicyclic carboxylic acid. Aromatic carboxylic acid is preferable from the view point of thermal resistance of a resin film, and aliphatic carboxylic acid is preferable from the view point of the effect as a dispersant. Examples of aromatic carboxylic acid include: as a bivalent carboxylic acid, phthalic acid, isophthalic acid, terephthalic acid, tetrachlorophthalic acid, naphthalene dicarboxylic acid, diphenylsulfone dicarboxylic acid, and diphenylmethane dicarboxylic acid; and as a carboxylic acid having three or more valences, trimellitic acid, pyromellitic acid and 1,4,5,8-naphthalene tetracarboxylic acid. Among the aromatic caroboxylic acids, pyromellitic acid is preferably used.

The kind of aliphatic carboxylic acid can be selected as needed. Examples thereof include: as a bivalent carboxylic acid, oxalic acid, malonic acid, succinic acid, methylsuccinic acid, glutaric acid, methylglutaric acid, adipic acid, pimelic acid, suberic acid, azelaic acid, sebacic acid, maleic acid, methylmaleic acid, fumaric acid, methylfumaric acid, itaconic acid, muconic acid, citraconic acid, glutaconic acid, acetylenedicarboxylic acid, tartaric acid, malic acid, spiculisporic acid, glutamic acid, glutathione, aspartic acid, cystine, acetylcysteine, diglycolic acid, iminodiacetic acid, hydroxyethyliminodiacetic acid, thiodiglycolic acid, thionyldiglycolic acid, sulfonyldiglycolic acid, poly(ethylene oxide)diglycolic acid (PEG acid), pyridinedicarboxylic acid, pyrazinedicarboxylic acid, epoxysuccinic acid, tetrahydrophthalic acid, methyltetrahydrophthalic acid and cyclohexane dicarboxylic acid; and as carboxylic acid having three or more valences, citric acid, 1,2,3-propanetricarboxylic acid, 1,2,4-butanetricarboxylic acid, 2-phosphono-1,2,4-butanetricarboxylic acid, 1,2,4-cyclohexanetricarboxylic acid, ethylenediaminetetraacetic acid, 1,2,3,4-butanetetracarboxylic acid, 1,2,4,5-cyclohexanetetracarboxylic acid and 1,2,3,4,5,6-cyclohexanehexacarboxylic acid. Among the aliphatic carboxylic acids, 1,2,3,4-butanetetracarboxylic acid is preferably used. These organic acids can be used singly, or in combination of two or more types.

The organic acid is preferably included in an amount of 40 to 120 parts by mass, more preferably 40 to 100 parts by mass and still more preferably 40 to 90 parts by mass, based on 100 parts by mass of the polysaccharide.

### (Coating liquid)

The negative electrode collector of the present invention can be formed by coating a coating liquid, which is obtained by mixing a solvent and each component which is described above and may be included in the resin film, on a substrate which is formed of the aforementioned aluminum foil.

The solvent used in the coating liquid can be optionally selected, and examples thereof include: water, a non-proton type polar solvent such as N-methylpyrrolidone and γ-butyrolactone, and a proton type polar solvent such as methanol, isopropyl alcohol and n-propyl alcohol. The amount of a solvent included in a coating liquid is preferably 20 to 99% by mass, more preferably 50 to 98% by mass, and still more preferably 80 to 95% by mass, based on 100% by mass of the coating liquid. When the amount of a solvent is set in such an amount, it is possible to achieve excellent workability of coating and the like, and a suitable coated amount of the resin film which is obtained by coating and drying the coating liquid can be achieved.

When the aforementioned organic acid is included in a resin film, a free organic acid may be added in a coating liquid, or an acid derivative such as acid anhydride or ester may be added so that a free organic acid or an organic acid bonding to a polysaccharide is formed by heating. However, it is preferable that a free organic acid or acid anhydride is added, since a by-product is not generated when an organic acid is bonded to a polysaccharide by heating and drying in the coating step.

When an acrylic polymer or a vinyl polymer is included in a resin film, such a polymer itself may be added in a coating liquid, or a monomer which can form such a polymer may be added in a coating liquid so that the polymer is formed by heating or irradiation of light.

Each component which can be included in the resin film and a method of mixing them with a solvent can be optionally selected. When a mixing apparatus is used, examples of the mixing apparatus include: a ball mill, sand mill, pigment disperser, grinder, ultrasonic disperser, homogenizer, planetary mixer and Hobart mixer.

### (Manufacturing method of a negative electrode collector)

A method of coating a coating liquid to aluminum foil is not limited in particular, and can be optionally selected. For example, a conventionally known method, which has been used as a method for forming an under coat layer or an active material layer used in a lithium ion battery, can be used as it is.

Concrete examples thereof include: a cast method, a bar coating method, a dip coating method and printing method. Among them, from the view point of controlling the thickness of a coating film easily, bar coating, gravure coating, gravure reverse coating, roll coating, Meyer bar coating, blade coating, knife coating, air knife coating, comma coating, slot die coating, slide die coating, dip coating and the like are preferably used. When both surfaces of the foil are coated, coating operation of the surfaces may be performed one by one, or coating operation may be performed to treat both surfaces simultaneously.

The coating amount of the coating liquid to the aluminum foil can be optionally selected. It is preferable that, as a mass after drying, the coating amount is 0.01 to 5 g/m², more preferably 0.1 to 3 g/m², and still more preferably 1 to 2 g/m². When such a coating amount is used, a resin film can completely cover aluminum foil without increase of feedthrough resistance of a collector, and alloying between lithium and aluminum can be prevented since penetration of an electrolyte is inhibited. Furthermore, such an amount is effective to improve cycle characteristics of a secondary battery, since deterioration of a collector is not caused.

Measurement of the coating amount can be performed as follows. A coated portion in which aluminum foil and a resin film are included is cut off, and the accurate area of the resin film and the mass of the aluminum foil which has the resin film are measured. Then, the resin film is removed using a releasing agent. The mass of the aluminum foil after removal is measured, and the mass of the resin film is obtained as a difference between the mass of the aluminum foil before and after removal. The difference is divided by the area to obtain a coating amount. As the releasing agent, a releasing agent which is generally used for a coating and a resin can be used, in so far as the releasing agent does not deteriorate aluminum foil.

The method of drying the coating liquid is not particularly limited. It is preferable that heating is performed for 10 seconds to 10 minutes in a temperature range of 100 to 300°C, and still more preferably 120 to 250°C. When heating is performed under such conditions, while productivity is maintained, roughness of a surface of the resin film can be improved, and risks such as a solvent remains in the resin film obtained after the coating liquid is dried, a reaction or cross-linking reaction by which a polymer is formed insufficiently proceeds, or an organic component in the coating liquid is decomposed can be reduced.

### (Negative electrode active material layer and negative electrode)

A negative electrode of a secondary battery can be formed by forming a negative electrode active material layer on the aforementioned resin film. Materials used for the negative electrode active material layer and the forming method of the negative electrode active material layer are not particularly limited, and conventionally known materials and methods which can be used for manufacturing a secondary battery can be used. For example, in the negative electrode active material layer, a graphite type material such as natural graphite and artificial graphite, and alloy type materials which include element such as silicon and tin can be used. Concrete examples of a method of forming a negative electrode active material layer include: a method wherein a slurry which includes 100 parts by mass of a negative electrode active material, 3 to 15 parts by mass of a conductive assistant, 1 to 25 parts by mass of a binder and a dispersing solvent is prepared, and is coated on a collector and dried. The amount of the dispersing solvent is not limited, and is optionally selected so that the operation such as coating is easily performed. For example, the amount of the solvent may be 70 to 400 parts by mass, based on 100 parts by mass of the total of a negative electrode active material, a conductive assistant and a binder.

### (Secondary battery)

The secondary battery generally includes the aforementioned negative electrode, a positive electrode, a separator and an electrolyte. The positive electrode and the separator are not particularly limited in so far as they are usable for a lithium ion secondary battery.

### (Electrolyte (nonaqueous electrolyte))

Conventionally known materials which are used for a secondary battery can be used as an electrolyte. For example, when aluminum foil is used as a positive electrode collector, a fluoride film can be preferably formed on a surface of a collector by using a solution, which is generated by dissolving a fluorine-containing lithium salt such as lithium hexafluorophosphate (LiPF₆) or lithium tetrafluoroborate (LiBF₄) in a solvent, wherein examples of the solvent include: cyclic carbonates such as propylene carbonate (PC) and ethylene carbonate (EC); chain-like carbonates such as dimethyl carbonate (DMC), ethylmethyl carbonate (EMC) and diethyl carbonate (DEC); and fatty acid esters. The solvent may be used singly or in combination of two or more types.

Furthermore, gel electrolyte, polymer electrolyte, inorganic solid electrolyte or molten salt electrolyte may be used.

The secondary battery can be applied to a power system. Furthermore, the power system can be applied for vehicles; transportation equipment such as airplanes, ships and train; portable apparatuses such as a mobile phone, a mobile information terminal and a mobile electronic computer; office equipment; and power generating systems such as a solar energy generation system, a wind power generation system, and a fuel cell generation system.

### EXAMPLES

Next, the present invention is more concretely explained using Examples and Comparative Examples. Here, the scope of the present invention is not limited to Examples. Modification of the secondary battery and the power system according to the present invention can be optionally made in so far as the intent of the present invention is not changed.

### (Manufacturing example)

Raw materials shown in Table 1 were mixed to disperse them for 10 minutes at a rotation speed of 300 rpm using a dissolver type mixer, and further treated for 30 seconds at 20000 rpm by a homogenizer (PRO200 (product name) available from Ieda trading corporation) to prepare a coating liquid which was fully dispersed.

Subsequently, aluminum foil was prepared which had a thickness of 30 µm (film thickness of an oxide film thereof was 3 nm) and was formed of an A 1085 material to which alkaline washing was performed. A coating liquid was coated on one surface of the aluminum foil by bar coating method using a Mayer bar No. #0, # or #2, so that the thickness of a resin film to be formed was achieved. Then, drying by heating of the foil was performed for three minutes at 180°C in the atmosphere. Similarly, another surface of the foil was also coated and dried by heating, and collectors 1 to 6 which had resin films thereon were obtained.

### (Comparative manufacturing example)

Comparative collector 1 and Comparative collector 2 were manufactured similar to the aforementioned manufacturing example, except that raw materials shown in Table 1 were used.

### (Thickness of a resin film)

A cross section of the collectors 1 to 6 and the comparative collectors 1 and 2 were exposed by cutting off due to processing performed by FIB (focusing ion beam), and deposition of platinum was further performed. Subsequently, the resin films were observed by the method described above using TEM (type: H-9500, manufactured by Hitachi., Ltd.). The thickness of the resin film thereof was obtained such that five photographs of the film were taken by photographing, the thickness of the resin film was measured at five points per one view, and an arithmetic average thereof was calculated. The thickness of the resin film was shown in Table 1.

### (Coating amount of a resin film)

A part (10 cm × 10 cm) of the collector 1 to 6 and the comparative collectors 1 and 2 on which the resin film had been formed was cut off, and the coating amount of the coated film was measured by the method described above using "Neorever #346" manufactured by Sansaikako corporation as a releasing agent.

### (Electrolyte permeation test)

Resin films which were the same as those of the collectors 1 to 6 and the comparative collectors 1 and 2 were formed on one surface on aluminum foil having opening, wherein an opening diameter thereof was 0.5 mm, an opening ratio was 40% and the thickness thereof was 20 µm, and the aforementioned permeation test was performed with respect to a nonaqueous electrolyte. Measurement conditions were shown below. The results were shown in Table 1.

Nonaqueous electrolyte: a solution wherein 1 M of LiPF₆ and EC : DMC : DEC (1:1:1 (v/v)) are included (manufactured by Kishida Chemical Co., Ltd., 1 wt% of vinyl chloride is added).
ICP-AES: ICPS-8000 (product name) manufactured by Shimadzu Corporation
Ion chromatography apparatus: DX-500 (product name) manufactured by Dionex corporation
Column for ion chromatography: SI-90 (product name) manufactured by Show Denko K.K.
GC-FID: HP 6890 (product name) manufactured by Agilent Technologies
Column for gas chromatography: DB-1 (product name), inner diameter: 0.32 mm, length: 20 m, film thickness: 1 µm, manufactured by J & W Scientific.

**Table 1**

| | | | Number of collector | | | | | | Number of comparative collector | |
|---|---|---|---|---|---|---|---|---|---|---|
| | | | Collector 1 | Collector 2 | Collector 3 | Collector 4 | Collector 5 | Collector 6 | Comparative collector 1 | Comparative collector 2 |
| Dispersing solvent | | N-methylpyrrolidone hylpyrrolidone (mass parts) | 87.5 | 85.0 | 80.0 | 75.0 | 85.0 | 0.0 | 94.8 | 80.0 |
| | | pure water (mass parts) | 0.0 | 0.0 | 0.0 | 0.0 | 0.0 | 85.0 | 0.0 | 0.0 |
| | | isopropyl alcohol (mass parts) | 5.0 | 5.0 | 5.5 | 5.5 | 5.0 | 5.0 | 5.0 | 5.5 |
| Conductive material | | acetylene black (mass parts) | 2.5 | 5.0 | 9.5 | 13.5 | 5.0 | 5.0 | 002 | 5.0 |
| Resin | Polysaccharide | glycerylated chitosan, (mass parts) | 2.5 | 2.5 | 2.9 | 4.0 | 2.5 | 2.5 | 0.10 | 20.0 |
| | Others | polyvinylidene fluoride (mass parts) | 0.0 | 0.0 | 0.0 | 0.0 | 0.5 | 0.0 | 0.0 | 0.0 |
| | | styrene-butadiene rubber (mass parts) | 0.0 | 0.0 | 0.0 | 0.0 | 0.0 | 0.5 | 0.0 | 0.0 |
| Organic acid | | pyromellitic anhydride (mass parts) | 2-5 | 2.5 | 2.3 | 2.0 | 2.5 | 0.0 | 0.07 | 15.0 |
| | | 1,2,3,4-butaiieteiracarbo_{\}vlic acid | 0.0 | 0.0 | 0.0 | 0.0 | 0.0 | 2.5 | 0.0 | 0.0 |
| Thickness of film (µm) | | | 0.6 | 1.2 | 26 | 3.3 | 1.2 | 1.3 | 0.008 | 7.7 |
| Coating amount (g/m²) | | | 0.3 | 0.6 | 1.2 | 1.9 | 0.6 | 0.6 | 0.008 | 7.2 |
| Permeation test of electrolyte | | Li | n.d. | n.d | n.d | n.d | n.d. | n.d. | Unmeasurable | n.d |
| | | P | n.d. | n.d. | n.d. | n.d. | n.d. | n.d. | Unmeasurable | n.d. |
| | | F | n.d | n.d. | n.d. | n.d. | n.d | n.d. | Unmeasurable | n d |
| | | carbonate | n.d. | n.d. | n.d. | n.d. | n.d. | n.d. | Unmeasurable | n.d. |

| | | | | | | | | | | |
|---|---|---|---|---|---|---|---|---|---|---|
| n.d.: not exceeding the detection limit Unmeasurable: A resin film was broken when the form of aluminum foil, which has openings and a resin film, was changed to a bag-shape, and therefore following operations were not performed. | | | | | | | | | | |

### (Examples 1 to 6)

### (Manufacture of a secondary battery)

The aforementioned collectors 1 to 6 were cut off to have a size of 10 cm × 10 cm. A slurry was prepared by mixing 94 parts by mass of artificial graphite (SCMG-AR (product name) manufactured by Showa Denko K.K.) as a negative electrode active material, 1 part by mass of acetylene black (DENKA BLACK (product name), powdered product, manufactured by Denki Kagaku Kogyo Kabushiki Kaisha) as a conductive assistant, 5 parts by mass of poylvinylidene fluoride (KF polymer #9130 (product name) manufactured by Kureha Corporation) as a binder and 94 parts by mass of N-methyl-2-pyrrolidone (Industrial Grade) as a dispersing solvent was prepared, and the slurry was coated on both surfaces of each of the collectors 1 to 6. Then, the coatings were dried and pressed to form negative electrode active material layers which had a thickness of 55 µm as one surface coating, and the formed collectors were used as a negative electrode.

On the other hand, a slurry was prepared by mixing 95 parts by mass of lithium cobaltate (CELLSEED C (product name) manufactured by Nippon Chemical Industrial Co., Ltd.) as a positive electrode active material, 2 parts by mass of acetylene black (DENKA BLACK (product name), powdered product, manufactured by Denki Kagaku Kogyo Kabushiki Kaisha) as a conductive assistant, 3 parts by mass of polyvinylidene fluoride (KF polymer # 1120 (product name) manufactured by Kureha Corporation) as a binder and 95 parts by mass of N-methyl-2-pyrrolidone (Industrial Grade) as a dispersing agent, and the slurry was coated on both surfaces of aluminum foil having a thickness of 30 µm, which was formed of an A1085 material to which alkaline washing was performed. The coatings was dried and pressed to form a positive electrode active material layer having a thickness of 50 µm as one surface coating, and the formed collector was used as a positive electrode.

Three of the positive electrodes and four of the negative electrodes were alternately laminated so that a separator (Celgard 2500 (product name) manufactured by POLYPORE International, Inc.) was incorporated between the positive electrode and the negative electrode, and the negative electrodes were provided as the outer most layers (design capacitance: 1 Ah). An aluminum tab electrode was attached to the positive electrode and a nickel tab electrode was attached to the negative electrode respectively by ultrasonic welding machine. They were placed in a bag-shaped aluminum packing material, and moisture was removed by a vacuum dryer at 60°C. Subsequently, a LiPF₆ solution which was used in the permeation test was injected in the packing material as a nonaqueous electrolyte, followed by impregnation under a vacuum atmosphere for 24 hours. Then, an opening of the aluminum packing material was sealed by a vacuum sealer to obtain a secondary battery.

### (Evaluation of a secondary battery)

The secondary battery was evaluated as follows.

The internal resistance thereof was measured by an AC impedance method at a measuring frequency of 1 kHz using an impedance meter (type: 3532-80, manufactured by HIOKI E.E. CORPORATION).

Furthermore, cycle characteristics of the secondary batteries were measured. In the measurement, a charge and discharge device (manufactured by Toyo System Co., Ltd.) was used, a current rate was changed so that 0.2 C, 2 C and 20 C were used, and an initial capacity retention ratio after 200 cycles was shown such that a capacitance at 0.2 C after 200 cycles was set 100%. The measurement was carried out at a cut voltage of 2.7 V to 4.2 V, and SOC was set as 100%.

### (Comparative Examples 1 and 2)

Secondary batteries were formed and evaluated similar to Examples, except that the aforementioned comparative collectors 1 and 2 were used as a negative electrode collector.

### (Comparative Example 3)

A secondary battery was formed and evaluated similar to Examples, except that aluminum foil which had a thickness of 30 µm (film thickness of an oxide film thereof was 3 nm) and was formed of an A 1085 material to which alkaline washing was performed was used as a negative electrode collector.

### (Comparative Example 4)

A secondary battery was formed and evaluated similar to Examples, except that the aluminum foil prepared in Comparative Example 1 was further treated by performing heating for three hours at a temperature of 150°C in an oxidation atmosphere so that a thickness of the oxide film thereof increased to 25 nm.

Evaluation results of the secondary batteries of Examples and Comparative Examples are shown in Table. 2.

### (Analysis of a negative electrode collector after evaluation of the cycle characteristics)

After the cycle test of the secondary batteries, the secondary batteries of Example 1 and Comparative Examples 1 and 3 were decomposed, and the negative electrode collectors were taken out. They were sufficiently washed by isopropyl alcohol, and then dried to perform analysis thereof.

As the results of observation of the collectors, no change was observed in the negative electrode collector of Example 1. However, degenerated parts were partially observed in the negative electrode collectors of Comparative Examples 1 and 3. When a part of the negative electrode collector of Example 1 and the deteriorated parts of Comparative Examples 1 and 3 were analyzed by the diffraction X-ray method, alloy including lithium and aluminum was detected in the negative electrode collectors of Comparative Examples 1 and 3. On the other hand, no lithium was detected in the negative electrode collector of Example 1.

**Table 2**

| | | | Examples | | | | | | Comparative Examples | | | |
|---|---|---|---|---|---|---|---|---|---|---|---|---|
| | | | Example 1 | Example 2 | Example 3 | Example 4 | Example 5 | Example 6 | Comparative Example 1 | Comparative Example 2 | Comparative Example 3 | Comparative Example 4 |
| | Collector | | Collector 1 | Collector 2 | Collector 3 | Collector 4 | Collector 5 | Collector 6 | Comparative collector 1 | Comparative collector 2 | Aluminum foil | Aluminum foil |
| Collector | Surface treatment of aluminum foil | | None | None | None | None | None | None | None | None | None | Heat treatment |
| | Thickness of oxide film of aluminum foil (nm) | | 3 | 3 | 3 | 3 | 3 | 3 | 3 | 3 | 3 | 25 |
| | Film through which nonaqueous electrolyte does not penetrate | | Presented | Presented | Presented | Presented | Presented | Presented | Presented | Presented | Not presented | Not presented |
| | Thickness of a film (µm) | | 0.4 | 12 | 2.6 | 3.3 | 1.2 | 1.3 | 0.008 | 7.7 | 0 | 0 |
| | Coating amount of a film (g/m²) | | 0.3 | 0.6 | 1.2 | 1.9 | 0.6 | 0.6 | 0.008 | 7.2 | 0 | 0 |
| | Internal resistance (mΩ) | | 5 | 8 | 9 | 10 | 10 | 11 | 18 | 58 | 9 | 30 |
| Evaluations of secondary battery | Capacity maintenance ratio after 200 cycles (%, with respect to 0.2C) | 2C | 94 | 96 | 97 | 97 | 97 | 96 | 90 | 91 | 68 | 70 |
| | | 20C | 61 | 64 | 65 | 70 | 66 | 66 | 44 | 65 | 23 | 30 |
| | Observation of a collector after 200 cycles | | No change | - | - | - | - | - | Degenerated part was observed | - | Degenerated part was observed | - |
| | Formation of alloy including Li and Al after 200 cycles | | Not detected | - | - | - | - | - | Detected | - | Detected | - |

### INDUSTRIAL APPLICABILITY

The purpose of the invention is to provide a secondary battery wherein aluminum foil can be used as a negative electrode collector, and which is excellent in cycle characteristics of the secondary battery and is not expensive.

## Claims

1. A lithium ion secondary battery which comprises a positive electrode and a negative electrode, wherein
the negative electrode includes a negative electrode collector and a negative electrode active material layer, and
the negative electrode collector comprises a base material, which is formed of aluminum foil, and a resin film which has a thickness of 0.01 to 5 µm, includes a polysaccharide and a conductive material, and does not allow a nonaqueous electrolyte to permeate therethrough.

2. The secondary battery according to Claim 1, wherein the conductive material is a carbonaceous material.

3. The secondary battery according to Claim 2, wherein the carbonaceous material is one or more kinds selected from a group consisting of carbon black, vapor-grown carbon fiber, carbon nanofiber and carbon nanotube.

4. The secondary battery according to Claim 1, wherein the polysaccharide is one or more kinds selected from a group consisting of chitosan, chitin, cellulose and derivatives thereof.

5. The secondary battery according to Claim 1, wherein the polysaccharide is a polysaccharide to which an organic acid is ester-bonded.

6. The secondary battery according to Claim 1, wherein the negative electrode active material layer includes graphite.

7. The secondary battery according to Claim 1, wherein the nonaqueous electrolyte includes, as a solvent, one or more kinds selected from a group consisting of cyclic carbonate, chain carbonate and fatty acid ester, and includes, as an electrolyte, a fluorine-containing lithium salt.

8. A power system which includes the secondary battery according to Claim 1.

9. The secondary battery according to Claim 1, wherein the resin film includes 20 to 70 mass% of a resin.

10. The secondary battery according to Claim 1, wherein the resin film includes 20 to 70% by mass of the polysaccharide.

11. The secondary battery according to Claim 1, wherein the resin film includes 30 to 80% by mass of the conductive material.

12. The secondary battery according to Claim 1, wherein the resin film includes 80 to 200 parts by mass of the conductive material based on 100 parts by mass of the polysaccharide.

## Patentansprüche

1. Lithiumionensekundärbatterie, die eine positive Elektrode und eine negative Elektrode umfasst, wobei
die negative Elektrode eine negative Kollektorelektrode und eine aktive Materialschicht einer negativen Elektrode umfasst, und
die negative Kollektorelektrode ein aus einer Aluminiumfolie gebildetes Grundmaterial und einen Harzfilm umfasst, der eine Dicke von 0,01 bis 5 µm aufweist, ein Polysaccharid und ein Leitermaterial umfasst und das Permeieren eines nicht-wässrigen Elektrolyten nicht zulässt.

2. Sekundärbatterie nach Anspruch 1, wobei das Leitermaterial ein kohlenstoffhaltiges Material ist.

3. Sekundärbatterie nach Anspruch 2, wobei das kohlenstoffhaltige Material eine oder mehrere Arten von Materialien ist, die aus der Gruppe ausgewählt sind, die aus Ruß, dampfgewachsenen Kohlenstofffasern, Kohlenstoffnanofasern und Kohlenstoffnanoröhrchen besteht.

4. Sekundärbatterie nach Anspruch 1, wobei das Polysaccharid eine oder mehrere Arten von Polysacchariden ist, die aus der Gruppe ausgewählt sind, die aus Chitosan, Chitin, Cellulose und Derivaten davon besteht.

5. Sekundärbatterie nach Anspruch 1, wobei das Polysaccharid ein Polysaccharid ist, an das eine organische Säure estergebunden ist.

6. Sekundärbatterie nach Anspruch 1, wobei die aktive Materialschicht einer negativen Elektrode Graphit umfasst.

7. Sekundärbatterie nach Anspruch 1, wobei der nichtwässrige Elektrolyt als Lösungsmittel eine oder mehrere Arten, die aus der Gruppe ausgewählt sind, die aus zyklischem Carbonat, kettenförmigem Carbonat und Fettsäureester besteht, und als einen Elektrolyten ein Fluor enthaltendes Lithiumsalz enthält.

8. Stromversorgungssystem, das die Sekundärbatterie nach Anspruch 1 enthält.

9. Sekundärbatterie nach Anspruch 1, wobei der Harzfilm 20 bis 70 Massenprozent eines Harzes enthält.

10. Sekundärbatterie nach Anspruch 1, wobei der Harzfilm 20 bis 70 Massenprozent des Polysaccharids enthält.

11. Sekundärbatterie nach Anspruch 1, wobei der Harzfilm 30 bis 80 Massenprozent des Leitermaterials enthält.

12. Sekundärbatterie nach Anspruch 1, wobei der Harzfilm 80 bis 200 Massenteile des Leitermaterials, bezogen auf 100 Massenteile des Polysaccharids, enthält.

## Revendications

1. Accumulateur secondaire à ions lithium qui comprend une électrode positive et une électrode négative, dans lequel
l'électrode négative comprend un collecteur d'électrode négative et une couche de matière active d'électrode négative, et
le collecteur d'électrode négative comprend une matière de base, qui est formée d'une feuille d'aluminium, et un film de résine qui présente une épaisseur de 0,01 à 5 µm, comprend un polysaccharide et une matière conductrice, et ne laisse pas un électrolyte non aqueux perméer à travers celui-ci.

2. Accumulateur secondaire selon la revendication 1, dans lequel la matière conductrice est une matière carbonée.

3. Accumulateur secondaire selon la revendication 2, dans lequel la matière carbonée est un ou plusieurs types choisis dans un groupe constitué de noir de carbone, de fibre de carbone ayant crû à la vapeur, de nanofibre de carbone et de nanotube de carbone.

4. Accumulateur secondaire selon la revendication 1, dans lequel le polysaccharide est un ou plusieurs types choisis dans un groupe constitué de chitosane, de chitine, de cellulose et de dérivés de ceux-ci.

5. Accumulateur secondaire selon la revendication 1, dans lequel le polysaccharide est un polysaccharide auquel un acide organique est lié par un ester.

6. Accumulateur secondaire selon la revendication 1, dans lequel la couche de matière active d'électrode négative comprend du graphite.

7. Accumulateur secondaire selon la revendication 1, dans lequel l'électrolyte non aqueux comprend, comme un solvant, un ou plusieurs types choisis dans un groupe constitué de carbonate cyclique, de carbonate en chaîne et d'ester d'acide gras, et comprend, comme un électrolyte, un sel de lithium contenant du fluor.

8. Système de puissance qui comprend l'accumulateur secondaire selon la revendication 1.

9. Accumulateur secondaire selon la revendication 1, dans lequel le film de résine comprend de 20 à 70 % en masse d'une résine.

10. Accumulateur secondaire selon la revendication 1, dans lequel le film de résine comprend de 20 à 70 % en masse du polysaccharide.

11. Accumulateur secondaire selon la revendication 1, dans lequel le film de résine comprend de 30 à 80 % en masse de la matière conductrice.

12. Accumulateur secondaire selon la revendication 1, dans lequel le film de résine comprend de 80 à 200 parties en masse de la matière conductrice rapporté à 100 parties en masse du polysaccharide.
